Europäisches Patentamt

European Patent Office

Office européen des brevets

(19)

(11) Veröffentlichungsnummer : **0 095 103**
**B1**

(12) **EUROPÄISCHE PATENTSCHRIFT**

(45) Veröffentlichungstag der Patentschrift :
10.09.86

(51) Int. Cl.⁴ : **C 10 J   3/46**

(21) Anmeldenummer : 83104703.0

(22) Anmeldetag : 13.05.83

(54) Verfahren und Vorrichtung zur Herstellung von Synthesegas durch partielle Oxidation von Kohle-Wasser-Suspensionen.

(30) Priorität : 22.05.82 DE 3219316

(43) Veröffentlichungstag der Anmeldung :
30.11.83 Patentblatt 83/48

(45) Bekanntmachung des Hinweises auf die Patenterteilung : 10.09.86 Patentblatt 86/37

(84) Benannte Vertragsstaaten :
BE DE FR GB IT NL SE

(56) Entgegenhaltungen :
DE-A- 2 130 120
DE-A- 2 309 821
DE-B- 1 152 783
DE-B- 2 933 060
DE-C-   968 970
FR-A- 2 286 104
FR-A- 2 336 470
US-A- 3 110 578
US-A- 3 705 108

(73) Patentinhaber : Ruhrchemie Aktiengesellschaft
Bruchstrasse 219
D-4200 Oberhausen 13 (DE)

(72) Erfinder : Materne, Winfried, Dipl.-Ing.
Osterfelder Strasse 26
D-5802 Wetter 4 (DE)
Erfinder : Schleper, Bernard, Dipl.-Ing.
Vennstrasse 10
D-4200 Oberhausen 13 (DE)
Erfinder : Gerhardus, Ulrich, Dipl.-Ing.
Im Torfveen 4
D-4200 Oberhausen 14 (DE)
Erfinder : Hibbel, Josef, Dipl.-Ing.
Bruchsteg 13
D-4200 Oberhausen 13 (DE)
Erfinder : Lieder, Bernhard
Siegfriedstrasse 61
D-4250 Bottrop (DE)
Erfinder : Scheve, Heinrich, Dipl.-Ing.
Im Torfveen 18
D4200 Oberhausen 14 (DE)
Erfinder : Schmidt, Volkmar, Dipl.-Ing.
Lützowstrasse 51
D-4200 Oberhausen 13 (DE)

(74) Vertreter : Reichelt, Karl-Heinz, Dr.
m. Br. Ruhrchemie Aktiengesellschaft Abt. PLD Postfach 13 01 60
D-4200 Oberhausen 13 (DE)

**Beschreibung**

Das in der DE-C-968 970 beschriebene Verfahren bedient sich einer Vorrichtung, die aus drei konzentrisch angeordneten Rohren besteht. Die innere Leitung wird von der mittleren Leitung umschlossen, die ihrerseits von dem äußeren Rohr umgeben wird. Dem Brennraum werden drei Gasströme zugeleitet, nämlich über die innere Leitung Sauerstoff, über das mittlere Rohr ein kohlenstaubhaltiger Sauerstoffstrom, während durch die äußere Leitung ein aus Sauerstoff und Wasserdampf bestehendes Gasgemisch geführt wird.

In der DE-A-1 152 783 wird ein Brenner beschrieben, der ebenfalls aus drei konzentrisch angeordneten Rohren besteht. Als Brennstoff werden Kohlenwasserstoffe eingesetzt. Brennstoff und Sauerstoff werden durch zwei der drei Düsen des Brenners geführt, während der für die Herstellung von Synthesegas benötigte Wasserdampf über die innere Leitung der Reaktionszone zugeleitet wird.

Die DE-OS-23 09 821 beschreibt einen Brenner und ein Verfahren zur Herstellung von Synthesegas durch partielle Oxidation von Kohlenwasserstoffen bzw. Aufschlämmungen fester, kohlenstoffhaltiger Brennstoffe in flüssigen Kohlenwasserstoffen. Der Brenner besteht aus einer zentralen, axialen, rohrförmigen Leitung, an die sich zwei weitere, zu dieser Leitung konzentrisch angeordnete, rohrförmige Zuführungen anschließen.

Zur Durchführung des Verfahrens kann über die zentrale, axiale Leitung Sauerstoff, über die Mittlere, die zentrale Zuführung konzentrisch umgebende Leitung ein Kohlenwasserstoff oder eine Aufschlämmung von festen, kohlenstoffhaltigen Brennstoffen in Kohlenwasserstoffen der Reaktion zugeführt werden.

Über die äußere konzentrische Leitung wird die Einleitung eines temperatursteuernden Gases vorgenommen. Als temperatursteuerndes Gas wird ein Gas oder Gasgemisch verwendet, das bei Bildung von Synthesegas endotherm reagiert. Empfohlen werden Wasser in Form von Tröpfchen oder Wasserdampf, Inertgas wie Stickstoff und Kohlendioxid.

Als temperatursteuerndes Gas sind Wasserdampf und Kohlendioxid bevorzugt, da inerte Gase den Nachteil bedingen, das Reaktionsprodukt lediglich zu verdünnen. Aufgabe dieses temperatursteuernden Gases ist es, die Reaktionstemperatur zu beeinflussen und die Rückvermischung von bereits gebildetem Synthesegas in die Zone der partiellen Oxidation zu unterbinden.

Der Nachteil des soeben beschriebenen Verfahrens besteht darin, daß Kohle-Wasser-Suspensionen sich nicht in erwünschtem Maße zu Synthesegas umsetzen. Bei Anwendung eines äußeren Inertgasstromes wird zwar eine Temperatursteuerung erreicht, doch diese geht zu Lasten des Umsatzes, so daß nicht umgesetzte Kohleanteile im Gasstrom enthalten sind.

Diese Nachteile vermeidet das erfindungsgemäße Verfahren zur Herstellung von Synthesegas durch partielle Oxidation von kohlenstoffhaltigem Material mit Sauerstoff oder einem Sauerstoff enthaltenden Gas bei erhöhtem Druck und Temperaturen zwischen 1 000 und 1 600 °C mittels eines aus drei konzentrisch orientierten Rohren bestehenden Brennersystems, wobei der Sauerstoff bzw. das sauerstoffhaltige Gas durch die innerste und äußerste Brennerzone und das kohlenstoffhaltige Material durch die mittlere Brennerzone geführt wird, dadurch gekennzeichnet, daß als kohlenstoffhaltiges Material eine Kohle-Wasser-Suspension eingesetzt wird und über die innere Brennerzone 1 bis 20 % der insgesamt für die partielle Oxidation erforderlichen Sauerstoffmenge eingebracht werden.

In einer besonderen Ausgestaltung des erfindungsgemäßen Verfahrens wird dem inneren Gasstrom, der insgesamt 20 % Gas, bezogen auf die gesamt erforderliche Sauerstoffmenge enthält, 1 bis 19 Gew-% an Synthesegas bezogen auf die gesamterforderliche Sauerstoffmenge zugesetzt. Die restliche Gasmenge ist Sauerstoff.

Die Kohle-Wasser-Suspension, die den mittleren Stoffstrom bildet, wird dem unter 10 bis 200 bar stehenden Reaktor mit einer Geschwindigkeit von 1 bis 25 m/sec. zugeführt. Üblicherweise empfiehlt es sich, die Kohle-Wasser-Suspension mit 5 bis 15 m/sec. der Reaktionszone zuzuleiten, während der innere wie auch der äußere Gasstrom mit einer Geschwindigkeit von 50 bis 300 m/sec. vorzugsweise 80 bis 200 m/sec. in die Reaktionszone gelangen. Die drei konzentrischen Zuführungen, in denen die beiden Gasströme und die Kohle-Wasser-Suspension getrennt, aber gleichzeitig geführt werden, weisen an ihrem der Reaktionszone zugewandten Ende konische Verjüngungen auf. Die tangentiale Verlängerung der inneren Oberfläche einer jeden konischen Verjüngung ergibt mit der zentrischen Achse einen Schnittpunkt, der gleichzeitig die Spitze eines gedachten Kegels darstellt. Je geringer die konische Verjüngung ausfällt, desto kleiner ist der Winkel, den die Tangente der inneren Oberfläche des Rohres mit der zentrischen Achse bildet. Der Kegel ist dementsprechend spitz. Je stärker die konische Verjüngung ausgeprägt ist, desto größer wird der Schnittwinkel zwischen der Tangente der inneren Oberfläche und der zentrischen Achse.

Es empfiehlt sich, für die konische Verjüngung des inneren Gasstromes einen verhältnismäßig kleinen Winkel von 0° bis 15° bezogen auf die zentrische Achse zu wählen, während der Winkel für die den inneren Gasstrom umschließende Kohle-Wasser-Suspension 5° bis 40° bezogen auf die zentrische Achse und der Winkel für den äußeren Gasstrom 10° bis 85° ebenfalls bezogen auf die zentrische Achse betragen soll.

Durch entsprechende Kombination der koni-

schen Verjüngungen wird erreicht, daß die Strömungsrichtung der Kohle-Wasser-Suspension mit der Strömungsrichtung des inneren Gasstromes einen Winkel von 5° bis 30° und die Strömungsrichtung des äußeren Gasstromes mit der Strömungsrichtung der Kohle-Wasser-Suspension einen Winkel von 5° bis 50° bildet.

Dadurch wird erreicht, daß der Strom der Suspension nahe des Endes der konischen Verjüngung durch den inneren Gasstrom auseinander gedrückt bzw. aufgerissen wird. Der Suspensionsstrom erfährt somit eine horizontale Ablenkung und wird nicht im freien Fall die Reaktionszone passieren. Demzufolge erhöht sich die mittlere Verweilzeit der einzelnen Kohle-Wasser-Tröpfchen und als Folge stellt sich ein verbesserter Umsatz ein.

Gleichzeitig trifft der äußere Gasstrom auf den durch den inneren Gasstrom aufgeweiteten Strom der Suspension und bewirkt eine zusätzliche Vermischung von Gas und Suspension, so daß eine Zone gleichmäßiger Verteilung von Gas bzw. Sauerstoff und feinsten Suspensionströpfchen herbeigeführt wird. Dies ist eine wesentliche Voraussetzung, einen möglichst hohen Umsetzungsgrad der Suspension zu erzielen. Unterstützt wird dies zusätzlich noch durch die unterschiedliche Eintrittsgeschwindigkeit der Kohle-Wasser-Suspension auf der einen Seite und der Gasströme auf der anderen Seite. Es ist auch möglich, den inneren Gasstrom mit höherer Geschwindigkeit als den äußeren Gasstrom in die Reaktionszone einzuleiten und umgekehrt.

Im allgemeinen liegt die Eintrittsgeschwindigkeit des Gasstromes erheblich höher als die der Kohle-Wasser-Suspension.

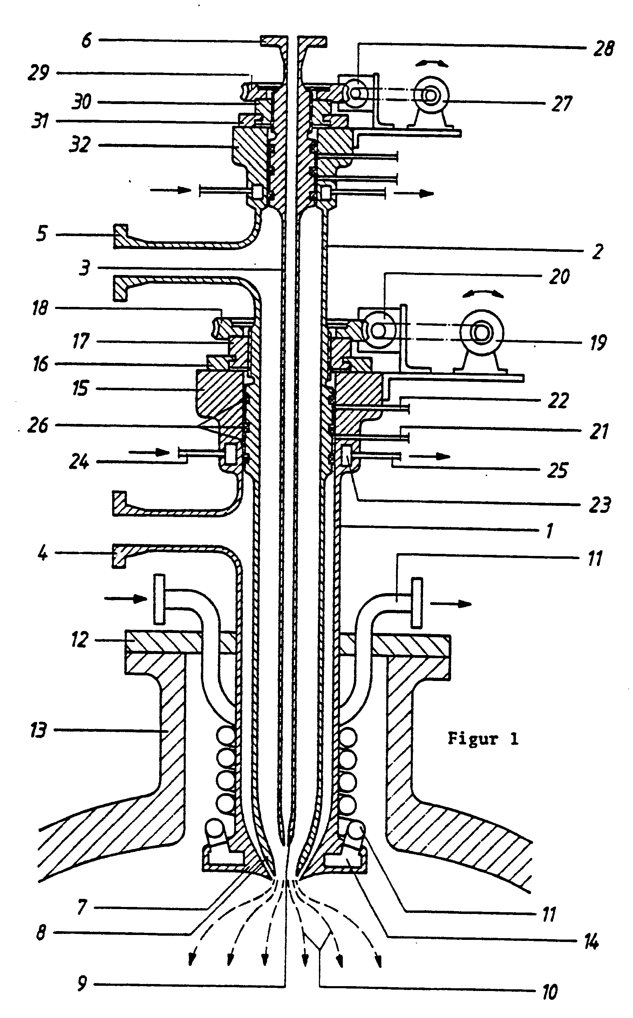

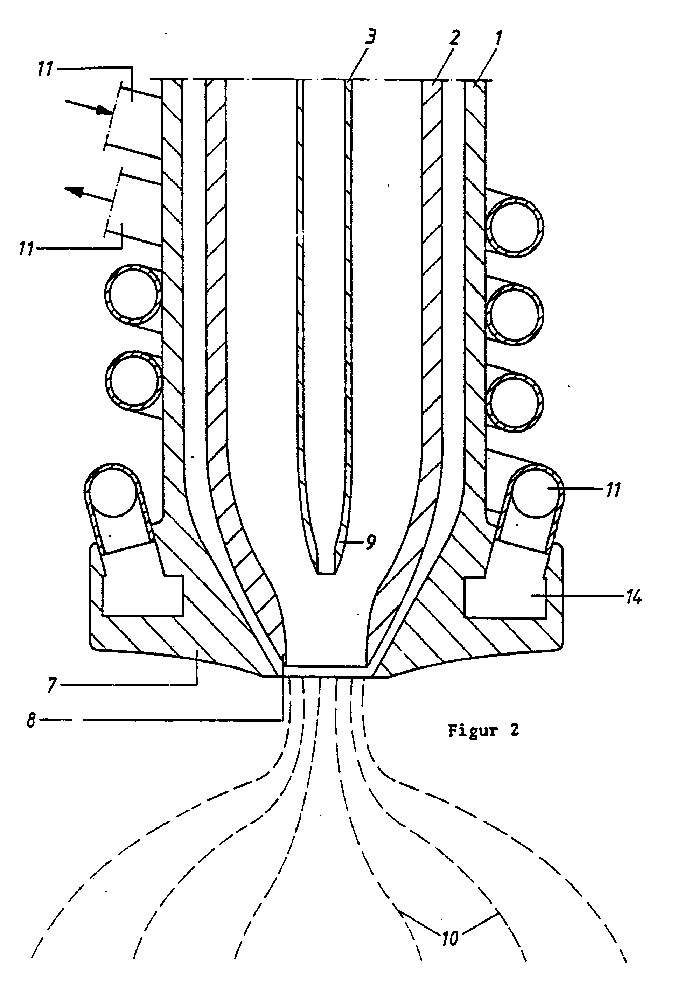

Wie Demonstrationsversuche zeigen, bildet sich unmittelbar am Ende der konischen Verjüngungen, d. h. an der Brennermündung eine Zone aus, die an die Form einer Tulpenblüte samt kurzem Stiel erinnert. In den beigefügten Figuren 1 und 2 ist diese durch den Verlauf der Linien 10 dargestellt, die die Bahnen einzelner Tröpfchen andeuten sollen.

An eine moderne Kohlevergasungsanlage, die unter kommerziellen Gesichtspunkten im Verbund mit nachgeschalteten Abnehmern wie chemischen Produktionsanlagen oder Kraftwerken arbeitet, ergeben sich zwangsläufig Anpassungsprobleme an den jeweiligen Bedarf der Abnehmer. Dies bedeutet, daß häufig eine rasche Änderung des Durchsatzes in der Kohlevergasungsanlage notwendig wird, um z. B. den Spitzenbedarf bei der Stromerzeugung zu decken. Deshalb ist dafür Sorge zu tragen, daß die Einsatzmengen an Kohle-Wasser-Suspension und Gas bzw. Sauerstoff kontinuierlich dem jeweiligen Mehr- oder Minderbedarf angeglichen werden können. Gleichzeitig muß aber vermieden werden, daß die Kohlevergasungsanlage z. B. wegen des Einsatzes eines entsprechend dimensionierten Brenners auch nur vorübergehend still gesetzt werden muß. Selbst ein nur kurzzeitiger Stillstand bewirkt eine unzulässige Abkühlung des Reaktors und ergibt somit Probleme, den Vergasungsprozeß erneut zu starten, da das Mauerwerk so heiß sein muß, daß ein Anspringen der chemischen Umsetzung von Wasser mit Kohle gewährleistet ist.

Erfindungsgemäß wird dies durch eine kontinuierliche Vergrößerung bzw. Verkleinerung der freien Austrittsöffnungen der Kohle-Wasser-Suspension und des äußeren Gasstromes erreicht.

Das mittlere Rohr, das die Kohle-Wasser-Suspension durch den mit dem inneren Rohr gebildeten Ringraum führt, ist mit dem inneren Rohr nicht starr verbunden, sondern das innere Rohr kann in Richtung der zentrischen Achse gegenüber dem mittleren Rohr verstellt werden.

Das mittlere Rohr kann unabhängig von der Verstellbarkeit des inneren Rohres gegenüber dem äußeren, starr angeordneten Rohr ebenfalls kontinuierlich verstellt werden.

Wird das mittlere Rohr in Richtung seiner Austrittsöffnung bewegt, so beginnt sich der Ringspalt zwischen der Innenseite des Außenrohres und der Außenseite des mittleren Rohres gleichmäßig zu verringern. Da aber die Größe dieses Ringspaltes die Menge des äußeren Gasstromes beeinflußt, eine Verringerung des Ringspaltes also eine Minderung des Gasdurchsatzes und eine Vergrößerung des Ringspaltes eine Erhöhung der Gasmenge nach sich zieht, kann der Vergasungsprozess entsprechend den Notwendigkeiten des praktischen Betriebsablaufes angepaßt werden, ohne den Vergasungsprozeß zu unterbrechen.

Gleiches gilt unabhängig von der soeben beschriebenen Veränderung des äußeren Ringspaltes für den Ringspalt, durch den die Kohle-Wasser-Suspension austritt. Ein Verschieben des Innenrohres in Richtung seiner Austrittsöffnung, also parallel zur zentrischen Achse, bewirkt eine Verringerung des Ringspaltes, der zwischen der Innenseite des mittleren Rohres und der Außenseite des Innenrohres gebildet wird. Ein Zurückziehen des Innenrohres führt zu einer Erweiterung des freien Ringspaltes und somit zu einem erhöhten Einsatz von Kohle-Wasser-Suspension.

Eine eventuell erforderliche Anpassung der über das Innenrohr zugeführten Gasmenge kann durch Anhebung oder Absenkung des Gasdruckes gesteuert werden. Eine Anhebung des Gasdruckes bewirkt bei konstantem Druck im Vergasungsprozeß ein Ansteigen der Gasmenge, ein Absenken des Gasdruckes eine Verringerung des inneren Gasstromes.

Auf diese Weise ist es möglich, den Vergasungsprozeß in weiten Grenzen dem jeweiligen Bedarf der Abnehmer von Synthesegas ohne jegliche Unterbrechung anzupassen.

Die zur Durchführung des erfindungsgemäßen Verfahrens erforderliche Vorrichtung ist in Figur 1 und Figur 2 abgebildet. Anhand dieser Abbildungen soll im folgenden das Verfahren beschrieben werden:

Die Zuführung der drei unter Druck stehenden Stoffströme erfolgt mittels dreier, konzentrisch angeordneter Rohre. Ein Außenrohr 1 dient zur Zufuhr des äußeren Stoffstromes, der aus reinem Sauerstoff oder Sauerstoff enthaltenden Gasgemisch besteht. In das Außenrohr 1 eingesetzt ist ein mittleres Rohr 2, dessen Außenseite die innere Begrenzung des äußeren Gasstromes darstellt. Das mittlere Rohr 2 dient zur Zufuhr von Kohle-Wasser-Suspension. Ein Innenrohr 3, das den inneren Gasstrom der Reaktion zuführt, ist in das mittlere Rohr 2 eingesetzt.

Die Zufuhr des äußeren Gasstromes erfolgt über einen mit Flansch versehenen Stutzen 4, der an dem Außenrohr angebracht ist. Die Kohle-Wasser-Suspension wird dem mittleren Rohr 2 über einen mit einem Flansch versehenen Stutzen 5 und der innere Gasstrom über eine mit Stutzen versehene Öffnung 6 dem Innenrohr 3 zugeleitet.

Das Außenrohr 1 weist eine konische Verjüngung 7 auf. Am Ende des mittleren Rohres ist eine konische Verjüngung 8 ausgeformt, und das Ende des inneren Rohres 3 ist gleichfalls zu einer konischen Verengung 9 ausgebildet. Formen und Anordnung der konischen Verjüngungen 7, 8 und 9 stellen die Brennertypen dar. Der Winkel der Verengung und der Abstand der drei Düsenenden bestimmen den Winkel der drei Stoffströme zueinander und beeinflussen den Ablauf des Brennvorganges innerhalb der Reaktionszone 10.

Daneben bestimmen die Mengen der drei Stoffströme und die Verteilung derselben auf die drei Zuführungswege sowie die relativen Geschwindigkeiten der Stoffströme zueinander den Ablauf der Umsetzung mit.

Da die Brennerdüsen, d. h. die konischen Verjüngungen 7, 8 und 9 nicht nur infolge ihrer Nähe zu der Reaktionszone einer hohen thermischen Belastung ausgesetzt sind, sondern auch in verstärktem Maße einer Abrasion unterliegen, sind sie aus temperaturbeständigem und verschleißfestem Material angefertigt. Zudem empfiehlt es sich, die konischen Verengungen in verstärkter Form auszugestalten. Dies geschieht durch Erhöhung der Wandstärke, z. B. durch Aufbringen des vorhin erwähnten verschleißfesten Materials auf die zu verstärkende Oberfläche.

Zur Verringerung der thermischen Belastung der Brennerspitze ist das Außenrohr 1 mit einer Leitung 11, die ein Kühlmittel wie Wasser oder Wasserdampf durch einen am Außenrohr 1 angebrachten Flansch 12 führt, versehen. Der Flansch 12 dient zur mechanischen Befestigung des Brenners an Reaktor 13. Die Leitung 11 ist um das Außenrohr 1 herumgewickelt und tritt in einen in der konischen Verjüngung 7 befindlichen Kühlkanal 14 ein. An den Kühlkanal 14 schließt sich ein weiteres Teilstück der Leitung 11, das zum Abtransport des Kühlmittels dient, an. Es ist ebenfalls um das Außenrohr herumgewickelt und tritt durch den Flansch 12 aus.

Das Außenrohr 1 besitzt oberhalb des Stutzens 4 eine Verstärkung 15 mit einem feststehenden Haltering 16, der eine verdrehbare Gewindemutter 17 aufnimmt. Die Gewindemutter 17 steht ihrerseits mit einem Schneckenrad 18 in Verbindung. Dieses Schneckenrad 18 wird von einem Stellmotor 19, der einen Kettenantrieb zu einer Schneckenwelle 20 besitzt, bewegt. Die Kräftübertragung erfolgt ausgehend von dem Stellmotor 19 mittels der Kette auf die Schneckenwelle 20, die ihrerseits die auf sie wirkende Kraft auf das Schneckenrad 18 überträgt.

Auf diese Weise ist es möglich — auch während der Ausübung des erfindungsgemäßen Verfahrens — das mittlere Rohr 2 über das mit diesem Teil verbundene Gegengewinde zum Teil 17 in seiner Position zu dem Außenrohr 1 in axialer Richtung zu verschieben. Durch Zurückziehen des mittleren Rohres 2 gegenüber dem Außenrohr 1 wird die durch die konischen Verjüngungen 7 und 8 gebildete Düsenöffnung erweitert. Bei vergrößerter Düsenöffnung ist es möglich, den Durchsatz des Stoffstromes zu erhöhen.

Umgekehrt bewirkt ein Verschieben des mittleren Rohres 2 gegenüber dem Außenrohr 1 eine Verengung der durch die konischen Verjüngungen gebildeten Düsenöffnung. Bei Verminderung der Düsenöffnung ist es möglich, den Durchsatz des Stoffstromes entsprechend zu vermindern.

Die Verstärkung 15 besitzt eine oder mehrere Bohrungen 21 und 22. Bei der Bohrung 22 handelt es sich um eine Prüfbohrung, die für die Kontrolle der Dichtigkeit bestimmt ist. Die Bohrung 21 stellt einen Anschluß für eine hier nicht abgebildete Sperrkammer dar. Aufgabe der Sperrkammer ist es, den Austritt des unter Überdruck stehenden reinen Sauerstoffs oder Sauerstoffgemisches zu verhindern.

Außerdem ist an dem unteren Ende der Verstärkung 15 eine Kühlvorrichtung angebracht, die aus einem Kühlkanal 23 samt Zuführungsleitung 24 für das Kühlmittel und einer Abführungsleitung 25 gebildet wird.

Das mittlere Rohr 2 besitzt in Höhe der Verstärkung 15 eine massiv ausgefertigte Verbreiterung. Diese Verbreiterung füllt den freien Querschnitt des Außenrohres 1 vollständig aus. In der Außenseite dieser Verbreiterung sind mehrere Nuten 26, die zur Aufnahme von Dichtungsringen bestimmt sind, vorhanden.

Das Innenrohr 3 kann mit Hilfe eines — wie zuvor beschrieben — analog angeordneten Mechanismus, der mit Hilfe eines Stellmotors 27 über einen Kettentrieb zu einer Schneckenwelle 28 ein mit der Schneckenwelle in Verbindung stehendes Schneckenrad 29 und eine Gewindemutter 30 bewegt, mit Hilfe eines feststehenden Halterings 31 gegenüber dem mittleren Rohr 2 verstellt werden. Die Erweiterung 32 entspricht dem Flansch 15, ist jedoch entsprechend den Abmessungen des mittleren Rohres und denen des inneren Rohres dimensioniert.

Durch Verschieben des Innenrohres 3 gegenüber dem mittleren Rohr 2 verändert sich der Querschnitt der durch die konischen Verjüngungen 8 und 9 gebildeten Düsenöffnung.

Neben einer Anpassung an den Durchsatz wird durch as Vorschieben bzw. Zurückziehen des Innenrohres 3 die Versprühung des Reaktionsgemisches und damit der Umsatz beeinflußt.

Auf diese Weise ist es möglich, die Brennervorrichtung bei laufendem Betrieb den jeweiligen Anforderungen anzupassen. Ist der Verbrauch an Synthesegas niedrig, da z. B. eine nachgeschaltete Gasturbine eines Kraftwerkes nur in Grundlast betrieben wird, werden das mittlere Rohr 2 und das Innenrohr 3 entsprechend vorgeschoben. Wird dagegen eine erhöhte Produktion an Synthesegas erforderlich, kann durch Zurückziehen der beiden Rohre 2 und 3 der Ringspalt vergrößert und der Stoffeinsatz in weiten Grenzen erhöht werden. Diese flexible Anpassung an das Betriebsgeschehen ist vor allem für ein kombiniertes Verfahren der Kohlevergasung zum Betreiben eines Kraftwerkes von Bedeutung, da ohne Unterbrechung der Gasproduktion der jeweilige Gasbedarf des Kraftwerkes gedeckt werden kann. Mit Hilfe der erfindungsgemäßen Vorrichtung kann also jederzeit den vorliegenden Erfordernissen des laufenden Betriebes Rechnung getragen werden.

Ein weiterer Vorteil des erfindungsgemäßen Verfahrens bzw. der Vorrichtung besteht darin, eine Kohlevergasungsanlage anfahren zu können. Während dieses Anfahrprozesses wird das zunächst kalte Mauerwerk des Reaktors auf Temperaturen von 1 000 bis 1 500 °C erhitzt und anschließend die Kohlevergasung, d. h. die Umsetzung von Kohle mit Wasser zu Synthesegas durchgeführt. Erst wenn das Mauerwerk entsprechend heiß geworden ist, kann die endotherm ablaufende Synthesegaserzeugung vorgenommen werden.

Zum Aufheizen des Mauerwerkes wird anstelle der Kohle-Wasser-Suspension z. B. Leichtöl, Benzin oder Wasserstoffgas mit Sauerstoff umgesetzt. Durch die so erzeugte Wärme wird das Mauerwerk des Reaktors aufgeheizt und anschließend wird das erfindungsgemäße Verfahren zur Vergasung beispielsweise einer Kohle-Wasser-Suspension ausgeübt.

Bislang war es erforderlich, das Mauerwerk mit Hilfe eines speziellen Brenners in einem separaten Schritt aufzuheizen, diesen Brenner jedoch abzubauen, sobald die erforderlichen Temperaturen des Mauerwerks erreicht waren. Diese umständliche Arbeitsweise erübrigt sich. Der bislang übliche Wechsel des Brenners, d. h. der Austausch des zum Anfahren der Anlage benötigten Brenners gegen einen zur Vergasung von Kohle-Wasser-Gemischen erforderlichen Brenner entfällt. Somit ergibt sich neben einem Zeitgewinn ein aus eingesparten Umbauarbeiten resultierender wirtschaftlicher Vorteil.

## Patentansprüche

1. Verfahren zur Herstellung von Synthesegas durch partielle Oxidation von kohlenstoffhaltigem Material mit Sauerstoff oder einem Sauerstoff enthaltenden Gas bei erhöhtem Druck und Temperaturen zwischen 1 000 und 1 600 °C mittels eines aus drei konzentrisch orientierten Rohren bestehenden Brennersystems, wobei der Sauerstoff bzw. das sauerstoffhaltige Gas durch die innerste und äußerste Brennerzone und das kohlenstoffhaltige Material durch die mittlere Brennerzone geführt wird, dadurch gekennzeichnet, daß als kohlenstoffhaltiges Material eine Kohle-Wasser-Suspension eingesetzt wird und über die innere Brennerzone 1 bis 20 % der insgesamt für die partielle Oxidation erforderlichen Sauerstoffmenge eingebracht werden.

2. Verfahren nach Anspruch 1, dadurch gekennzeichnet, daß 1 bis 19 % der erforderlichen Gesamtsauerstoffmenge durch die innere Brennerzone in Form von Synthesegas eingebracht werden.

3. Verfahren nach Anspruch 1 und 2, dadurch gekennzeichnet, daß die Kohle-Wasser-Suspension mit einer Geschwindigkeit von 1 bis 25 m/sec., vorzugsweise 5 bis 15 m/sec., und der innere Gasstrom wie der äußere, die Kohle-Wasser-Suspension umgebende Gasstrom mit einer Geschwindigkeit von 50 bis 300 m/sec., vorzugsweise 80 bis 200 m/sec., der Reaktionszone zugeleitet werden.

4. Verfahren nach Anspruch 1 bis 3, dadurch gekennzeichnet, daß die Strömungsrichtung der Kohle-Wasser-Suspension mit der Strömungsrichtung des inneren Gasstromes einen Winkel von 5 bis 30° und die Strömungsrichtung des äußeren Gasstromes mit der Strömungsrichtung der Kohle-Wasser-Suspension einen Winkel von 5 bis 50° bilden.

5. Vorrichtung zur Durchführung des Verfahrens gemäß Ansprüchen 1 bis 4, bestehend aus einem Dreirohrbrennersystem (1, 2, 3) mit konisch verjüngend ausgebildeten Enden (7, 8, 9) der konzentrisch angeordneten Rohre (1, 2, 3) und Kühlanlage (11, 14) im Bereich der Brennerspitze, dadurch gekennzeichnet, daß das äußere Rohr (1) und das innere Rohr (3) unabhängig voneinander über Stellmotore (19, 27) und Schneckenwellen (20, 28) in Richtung der zentrischen Achse des Brennersystems zwecks Regulierung der Austrittswinkel, der Strömungsgeschwindigkeit und der Menge der Kohle-Wasser-Suspension beweglich angeordnet sind.

## Claims

1. A process for producing synthesis gas by partial oxidation of carbon-containing particles with oxygen or an oxygen-containing gas at elevated pressure and at a temperature of 1000 and 1600 °C by means of a burner system consisting of three concentrically arranged lines, whereby the oxygen or the oxygen-containing gas is passed through the innermost and outermost burner zones and the carbon-containing particles through the middle burner zone, characterised in that a coal-water suspension is employed as the carbon-containing material and 1 to 20 % of the total oxygen required for partial oxidation is introduced through the inner burner zone.

2. A process according to claim 1, characterised in that 1 to 19 % of the total amount of oxygen required is introduced into the inner burner zone in the form of synthesis gas.

3. A process according to claims 1 and 2, characterised in that the coal-water suspension is fed into the reaction zone at a velocity of 1 to 25 m/sec., preferably 5 to 15 m/sec, and the inner gas stream as well as the outer gas stream surrounding the coal-water suspension is fed in at a velocity of 50 to 300 m/sec, preferably 80 to 200 m/sec.

4. A process according to claims 1 to 3, characterised in that the flow direction of the coal-water suspension forms an angle of 5 to 30° with the flow direction of the inner gas stream and the flow direction of the outer gas stream forms an angle of 5 to 50° with the flow direction of the coal-water suspension.

5. Apparatus for carrying out the process according to claims 1 to 4, consisting of a three-burner system (1, 2, 3) with conically tapering ends (7, 8, 9) of the concentrically arranged lines (1, 2, 3) and the cooling system (11, 14) in the zone of the burner tip, characterised in that the outer line (1) and the inner line (3) can be moved independently of each other via servomotors (19, 27) and worm shafts (20, 28) in the direction of the central axis of the burner system for the purpose of regulating the angle of outlet, the flow direction and the amount of coal-water suspension.

**Revendications**

1. Procédé pour produire du gaz de synthèse par oxydation partielle d'une matière contenant du charbon avec de l'oxygène ou avec un gaz contenant de l'oxygène sous pression élevée et à des températures comprises entre 1 000 et 1 600 °C à l'aide d'un système de brûleur consistant en trois tubes orientés concentriquement, l'oxygène ou le gaz contenant de l'oxygène étant introduit dans la zone la plus interne et la plus externe du brûleur et la matière contenant du carbone étant introduite par la zone médiane du brûleur, procédé caractérisé en ce qu'on utilise comme matière contenant du carbone une suspension de charbon dans de l'eau et l'on introduit dans la zone interne du brûleur 1 à 20 % de la quantité d'oxygène nécessaire au total pour l'oxydation partielle.

2. Procédé selon la revendication 1, caractérisé en ce qu'on introduit, sous forme de gaz de synthèse dans la zone interne du brûleur 1 à 19 % de la quantité totale d'oxygène nécessaire.

3. Procédé selon les revendications 1 et 2, caractérisé en ce qu'on achemine vers la zone de réaction la suspension de charbon dans de l'eau à une vitesse de 1 à 25 m/s, avantageusement 5 à 15 m/s, et le courant interne de gaz ainsi que le courant de gaz externe entourant la suspension de charbon dans de l'eau à une vitesse de 50 à 300 m/s, avantageusement 80 à 200 m/s.

4. Procédé selon l'une des revendications 1 à 3, caractérisé en ce que la direction d'écoulement de la suspension de charbon dans l'eau forme avec la direction d'écoulement du courant de gaz interne, un angle de 5 à 30°, et la direction d'écoulement du courant de gaz externe forme, avec la direction d'écoulement de la suspension de charbon dans l'eau, un angle de 5 à 50°.

5. Appareil pour la mise en œuvre du procédé selon les revendications 1 à 4, consistant en un système de brûleur à trois tubes (1, 2, 3) comportant des extrémités (7, 8, 9) s'effilant coniquement des tubes (1, 2, 3) disposés concentriquement et un dispositif (11, 14) de refroidissement dans la zone de la pointe du brûleur, appareil caractérisé en ce que le tube externe (1) et le tube interne (3) sont montés de façon à pouvoir être déplacés, indépendamment l'un de l'autre, par des moteurs (19, 27) de commande et des arbres (20, 28) à vis sans fin dans la direction de l'axe central du brûleur pour réguler l'angle de sortie, la vitesse d'écoulement et la quantité de la suspension de charbon dans l'eau.

Figur 1

Figur 2